# FASCICULE DE BREVET EUROPEEN

(11) **EP 0 907 216 B1**
(45) Date de publication et mention de la délivrance du brevet: **02.04.2003**
(21) Numéro de dépôt: 98401949.7
(22) Date de dépôt: 30.07.1998
(51) Int. Cl.: H01M 10/24

(54) **Accumulateur ouvert de type industriel sans maintenance**
Offener wartungsfreier industrieller Akkumulator
Open and maintenance free accumulator of industrial type

(30) Priorité: 04.08.1997 FR 9709950
(43) Date de publication de la demande: 07.04.1999
(73) Titulaire: ALCATEL, 75008 Paris (FR)
(72) Inventeur: Berlureau, Thierry, 33300 Bordeaux (FR); Liska, Jean-Louis, 33200 Bordeaux (FR)
(74) Mandataire: Lamoureux, Bernard

(56) Documents cités:
- EP-A- 0 070 646
- EP-A- 0 401 076
- EP-A- 0 504 472
- EP-A- 0 666 608
- WO-A-84/00853
- WO-A-90/11626
- GB-A- 2 203 280
- PATENT ABSTRACTS OF JAPAN vol. 096, no. 008, 30 août 1996 & JP 08 096833 A (SHIN KOBE ELECTRIC MACH CO LTD), 12 avril 1996

## Description

La présente invention concerne un générateur électrochimique secondaire à électroyte aqueux ouvert de type industriel ne nécessitant pas de maintenance. Un accumulateur est dit de type "industriel" lorsqu'il possède une forte capacité supérieure à 5Ah, et généralement comprise entre 10Ah et 200Ah. Un accumulateur est dit "ouvert" lorsqu'il fonctionne à une pression relative au plus égale à 1 bar (différence de pression par rapport à la pression atmosphérique), la pression maximale de fonctionnement étant fixée par la pression d'ouverture d'une soupape. Un accumulateur ouvert de type industriel a habituellement un conteneur de forme prismatique en matériau plastique contenant des électrodes planes. Ces accumulateurs à électrolyte alcalins aqueux sont le plus souvent basés sur les couples nickel-cadmium (Ni-Cd) et nickel-métal hydrurable (Ni-MH).

Un accumulateur ouvert de type industriel (vented cell) comporte un faisceau électrochimique comprenant plusieurs couples. Chaque couple est composé d'une électrode positive, d'une électrode négative et d'un séparateur quasi imperméable aux gaz disposé entre les électrodes négative et positive. Le faisceau électrochimique est immergé dans un électrolyte libre en quantité très excédentaire.

Le fonctionnement des accumulateurs à électrolyte aqueux provoque des réactions de dégagement gazeux en surcharge, respectivement d'oxygène sur l'électrode positive et d'hydrogène sur l'électrode négative. Un accumulateur ouvert fonctionne à une basse pression. Les gaz produits en surcharge s'échappent par la soupape, entraînant ainsi une consommation de l'eau de l'électrolyte. On estime la perte d'eau à environ 0,3 cm³ par ampère-heure surchargé. Cet accumulateur exige donc une maintenance régulière, c'est-à-dire qu'il convient de rajouter de l'eau périodiquement. La fréquence de maintenance est fonction des conditions d'utilisation de l'accumulateur dans l'application considérée, notamment de la capacité chargée.

Pour limiter la fréquence des remises à niveau d'électrolyte consécutives aux périodes de fonctionnement, on a mis au point des accumulateurs dit "semi-ouvert" (semi-flooded cell) dans lesquels le faisceau électrochimique n'est immergé que partiellement dans l'électrolyte, ce qui autorise l'accès à la partie non-immergée de l'électrode négative de l'oxygène généré à l'électrode positive, afin que s'y produise la recombinaison (EP-0 070 646).

Dans ces conditions la recombinaison n'est jamais complète et ces accumulateurs nécessitent encore une maintenance. En outre la partie non-immergée des électrodes négatives est exposée à une atmosphère d'oxygène qui peut provoquer sa dégradation.

Afin de supprimer toute opération de maintenance, des accumulateurs de type industriel dit "étanches" (sealed cell) dérivés de ceux précédemment décrits ont été proposés (EP-0 666 608). Un accumulateur étanche fonctionne à une pression relative qui peut être supérieure à 1 bar. Dans un accumulateur étanche, le faisceau électrochimique comprend un séparateur très perméable aux gaz, disposé entre les électrodes négative et positive, qui autorise l'accès à l'électrode négative de l'oxygène généré à l'électrode positive, afin que s'y produise la recombinaison. Un accumulateur étanche contient en outre un dispositif pour la recombinaison de l'oxygène. L'oxygène formé sur l'électrode positive conduit en surcharge à une élévation de la pression inteme de l'accumulateur qui dépend du régime utilisé. Il s'établit ensuite un régime permanent au cours duquel tout l'oxygène produit à l'électrode positive est réduit (ou "recombiné"). L'électrolyte est introduit en quantité limitée correspondant au volume poreux disponible dans les composants (électrodes, séparateur, dispositif de recombinaison).

Le dégagement gazeux peut provoquer l'expulsion de l'électrolyte contenu dans la porosité des électrodes. Ce phénomène écourte la vie de l'accumulateur en précipitant l'assèchement du faisceau. Le document FR-1 012 395 propose de prévoir dans un accumulateur Ni-Cd étanche de faible capacité, un volume dans lequel l'électrolyte expulsé est susceptible de se rassembler. Les séparateurs plongeant dans l'électrolyte permettent de ramener l'électrolyte dans le faisceau.

Les accumulateurs Ni-MH possèdent une électrode négative dont la matière électrochimiquement active est un alliage métallique hydrurable. Au cours du fonctionnement de l'électrode en milieu aqueux, la corrosion de l'alliage hydrurable est inévitable. Cette réaction entraîne une consommation supplémentaire d'eau.

Dans le cas où l'électrolyte est introduit en quantité limitée à la porosité des composants, la corrosion conduit à un assèchement prématuré de l'accumulateur : sa capacité diminue et sa durée d'utilisation est écourtée. Le document JP-8-96833 propose d'ajouter dans la partie inférieure d'un accumulateur Ni-MH, une chambre séparée du faisceau par une paroi étanche et contenant de l'électrolyte. A la partie inférieure du faisceau électrochimique, un prolongement du séparateur traverse cette paroi et pénètre dans la chambre.

Si la durée de vie peut ainsi être prolongée, les capacités des accumulateurs étanches restent inférieures à celles des accumulateurs ouverts. Ceci est dû au fait que, dans les premiers cycles, les électrodes ne disposent pas d'assez d'électrolyte pour atteindre leur rendement maximum. Une addition subséquente d'électrolyte n'aura pas d'effet sur le rendement.

Le but de la présente invention est de proposer un accumulateur ouvert de type industriel ne nécessitant pas de maintenance, et dont l'énergie massique, l'énergie volumique, et la durée de vie sont supérieures à celles d'un accumulateur étanche de type industriel.

La présente invention a pour objet un accumulateur ouvert de type industriel selon les caractéristiques de la revendication 1.

Les accumulateurs ouverts de type industriels sont habituellement muni d'un conteneur prismatique en matériau plastique (polypropylène) incapable de résister à une forte surpression (supérieure à 2 bars relatif). Dans l'accumulateur selon la présente invention, le séparateur est perméable aux gaz afin d'autoriser l'accès à l'électrode négative de l'oxygène généré à l'électrode positive. Néanmoins la présence d'un dispositif de recombinaison supplémentaire est indispensable car il augmente sensiblement la vitesse de recombinaison et permet d'atteindre un équilibre à une pression modérée, même à des régimes élevés. Le dispositif de recombinaison comporte un ou plusieur sites de recombinaison reliés à la polarité négative servant de siège à la réaction. De préférence ledit dispositif comporte un espaceur afin de ménager un volume constant pour la circulation gazeuse. Ledit dispositif peut comporter un espaceur associé à une électrode auxiliaire. Un tel système de recombinaison est par exemple décrit dans le document EP-A-0 666 608 publié le 09/08/95.

Dans un accumulateur ouvert de type industriel l'electrolyte est introduit en quantité excédentaire (flooded conditions) afin de permettre aux électrodes d'atteindre un rendement élevé, supérieur à celui observé dans un accumulateur étanche contenant une quantité d'électrolyte limitée à la porosité des composants. L'accumulateur selon la présente invention comprend de l'électrolyte en quantité excédentaire et un volume capable de contenir au moins une partie de cet excédent. Par capilarité, le séparateur en contact avec cet électrolyte irrigue le faisceau électrochimique.

Le volume est situé entre la base du faisceau et le fond du conteneur de telle sorte qu'un prolongement du séparateur dépassant à la partie inférieure du faisceau plonge dans l'électrolyte contenu dans ce volume. Ce volume peut être ménagé en rehaussant le faisceau par rapport au fond de l'accumulateur. Cette disposition présente l'avantage que une partie de l'excédent d'électrolyte se trouve sous le faisceau, au lieu de le recouvrir. L'accès du gaz au dispositif de recombinaison sera rendu possible plus tôt et l'accumulateur atteindra plus rapidement un fonctionnement quasi-étanche sans ouverture de la soupape. Les pertes d'électrolyte de l'accumulateur selon l'invention seront donc ainsi réduite par rapport à un accumulateur de l'art antérieur.

On distingue au cours du cyclage trois phases de fonctionnement pour l'accumulateur selon l'invention. Durant les tout premiers cycles les électrodes atteignent leur rendement maximum car le séparateur leur fournit autant d'électrolyte que nécessaire qu'il va puiser dans la quantitié excédentaire. Le dispositif de recombinaison n'a pas encore atteint son plein rendement et la pression interne peut atteindre des valeurs supérieure à la pression d'ouverture de la soupape. On peut alors observer une faible consommation d'électrolyte à chaque cycle car la soupape laisse échapper les gaz. Cette première phase de très courte durée n'est pas toujours présente. Une deuxième phase lui succède où la recombinaison s'effectue avec efficacité et la pression tend à se stabiliser. Enfin, après quelques cycles de charge/décharge, la pression inteme reste inférieure à la pression d'ouverture de la soupape. Le taux de recombinaison est pratiquement de 100% ce qui traduit un comportement proche de celui d'un accumulateur étanche.

Après un cyclage prolongé, l'assèchement des électrodes, qui est une cause fréquente de défaillance des accumulateurs étanches, risque alors de se produire. Dans l'accumulateur selon l'invention, le séparateur en contact avec l'électrolyte excédentaire irrigue le faisceau électrochimique par capilarité pendant le cyclage. La durée de vie de l'accumulateur ouvert selon l'invention est très supérieure à celle d'un accumulateur étanche.

Dans l'accumulateur selon la présente invention, la quantité d'électrolyte introduite correspond au volume d'électrolyte absorbé par le faisceau électrochimique (électrodes et séparateur) et le dispositif de recombinaison, considérée comme quantité de référence, augmentée d'une quantité excédentaire. De préférence, ladite quantité totale d'électrolyte est au moins égale à 120% de la quantité d'électrolyte contenu dans le volume poreux total desdites électrodes, dudit séparateur et dudit dispositif. La quantité excédentaire représente donc au moins 20% de la quantité de référence. A titre d'exemple, on a réalisé des accumulateurs comportant une quantité d'électrolyte égale à 145% et 126% de la quantité d'électrolyte contenu dans le volume poreux total.

La capacité totale des électrodes négatives est habituellement supérieure à celle des électrodes positives. Cet excédent de capacité négative sert dans un accumulateur étanche à éviter le dégagement d'hydrogène impossible à recombiner. En outre dans un accumulateur Ni-MH il sert à compenser la baisse de capacité négative due à la corrosion de l'alliage.

Dans un accumulateur ouvert, les électrodes négatives possèdent une surcapacité vis à vis de la capacité des électrodes positives qui est moindre que dans un accumulateur étanche. Les électrodes des deux polarités se trouvent surchargées à chaque cycle et l'excédent de capacité négative ne sert qu'à compenser l'effet de la corrosion (diminution de la quantité de matière active). Selon la présente invention, lesdites électrodes négatives ont de préférence une capacité totale comprise entre 100% et 150% de la capacité totale desdites électrodes positives.

Selon une variante, lesdites électrodes positives sont de type fritté et lesdites électrodes négatives sont de type empâté sur un support conducteur choisi parmi un support bidimensionnel, comme un feuillard plein ou perforé, un métal déployé, une grille ou un tissu, et un support tridimensionnel, comme une mousse ou un feutre.

Selon une autre variante, lesdites électrodes positives sont de type empâté sur un support conducteur tridimensionnel et lesdites électrodes négatives sont de type empâté sur un support conducteur choisi parmi un support bidimensionnel et un support tridimensionnel.

L'accumulateur selon l'invention peut comporter des électrodes négatives contenant un alliage métallique hydrurable comme matière électrochimiquement active.

L'accumulateur sans maintenance conforme à l'invention est particulièrement adapté à une utilisation dans le domaine aéronautique ou ferroviaire, ainsi que pour la propulsion de véhicules électriques.

D'autres caractéristiques et avantages de la présente invention apparaîtront au cours des exemples suivants de réalisation, donnés bien entendu à titre illustratif et non limitatif, et dans le dessin annexé sur lequel la figure unique représente en coupe schématique un accumulateur selon la présente invention.

### EXEMPLE 1

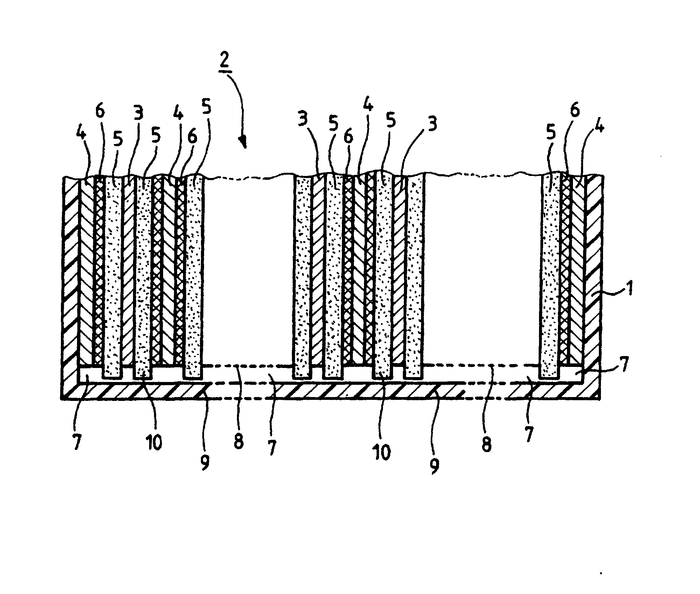

On réalise un accumulateur A selon l'invention. Comme le montre la figure 1, il se compose d'un bac 1 de forme parallélépipèdique en matière plastique et d'un faisceau électrochimique 2 comportant plusieurs couples d'électrodes composés d'une électrode positive 3 et d'une électrode négative 4 encadrant un séparateur 5.

L'électrode négative 4 est constituée d'une mousse de nickel dans laquelle est déposée une pâte comprenant un liant polymère, un alliage métallique hydrurable comme matière électrochimiquement active et des additifs usuels de mise en forme. L'électrode positive 3 est constituée d'une mousse de de nickel dans laquelle est incorporé une matière active à base d'hydroxyde de nickel. Le séparateur 5 perméable aux gaz est constitué de deux couches de feutre de polypropylène. Le dispositif de recombinaison comprend des sites de recombinaison 6 régulièrement disposés à l'intérieur du faisceau entre les électrodes et connectés électriquement à la polarité négative.

L'électrolyte est une solution aqueuse de potasse KOH, de soude NaOH et de lithine LiOH à une concentration totale de 8,5N. La quantité d'électrolyte introduite dans l'accumulateur correspond au volume d'électrolyte absorbé par le faisceau électrochimique 2 et les sites 6 du dispositif de recombinaison (quantité de référence), augmentée d'une quantité excédentaire. Cette quantité excédentaire représente 45% de la quantité de référence.

Un volume 7 est ménagé entre la base 8 du faisceau électrochimique 2 et le fond 9 du conteneur 1. Des prolongements 10 du séparateur 5 dépasse du faisceau 2 et plonge dans l'électrolyte contenu dans le volume 7. Pour l'accumulateur A, ce volume occupe une hauteur qui représente 10% de la hauteur des électrodes..

L'accumulateur A est équipé d'une soupape de sécurité dont la pression d'opération est inférieure à 1 bar relatif. La capacité totale des électrodes négatives C⁻ représente 130% de la capacité totale des électrodes positives C⁺. La capacité nominale de l'accumulateur A est de 86Ah.

### EXEMPLE 2

A titre de comparaison, on réalise un accumulateur étanche B de type industriel. Cet accumulateur diffère de l'accumulateur A par le fait qu'il contient de l'électrolyte en quantité limitée et qu'il est équipé d'une soupape de sécurité dont la pression d'opération est supérieure ou égale à 2 bars relatifs. L'accumulateur B ne possède pas de volume supplémentaire accueillant de l'électrolyte.

La capacité totale des électrodes négatives C⁻ représente 160% de la capacité totale des électrodes positives C⁺, ce qui est plus important que pour l'accumulateur A et permet d'éviter le dégagement d'hydrogène en fin de charge de l'accumulateur. La capacité nominale de l'accumulateur B est de 86Ah.

### EXEMPLE 3

A titre de comparaison on réalise un accumulateur ouvert C de type industriel nécessitant des opérations de maintenance régulières. Cet accumulateur diffère de l'accumulateur A par le fait qu'il contient un séparateur quasi imperméable aux gaz constitué de deux couches de feutre de polypropylène et d'une membrane microporeuse et qu'il ne contient pas de dispositif de recombinaison.

La quantité d'électrolyte introduite dans l'accumulateur correspond au volume d'électrolyte absorbé par le faisceau électrochimique (quantité de référence), augmentée d'une quantité excédentaire correspondant à l'immersion complète du faisceau électrochimique jusqu'au recouvrement de l'extrémité supérieure du faisceau électrochimique et dépassement sur une hauteur de 20mm. Cette quantité excédentaire représente 60% de la quantité de référence. La capacité nominale de l'accumulateur C est de 86Ah.

### EXEMPLE 4

Les accumulateurs A, B et C sont évalués électrochimiquement par les tests comparatifs suivants. On effectue un cyclage dans les conditions suivantes :
- décharge à lc/2 de 80% de la capacité nominale (lc est le régime permettant la décharge de la capacité nominale de l'accumulateur en 1 heure),
- recharge à lc/3 de 84% de la capacité nominale,
- surcharge à lc/20 jusqu'à un coefficient total de charge correspondant à 88% de la capacité nominale.

Après 650 cycles, la capacité réelle que les accumulateurs sont capables de restituer est mesurée à un régime de décharge de lc/3 et 2lc. On évalue simultanément leur énergie massique. La puissance massique est calculée à partir de la mesure de la résistance inteme et de la tension en circuit ouvert pour une profondeur de décharge (DOD) de 50%.

Les caractéristiques et les résultats obtenus pour les trois accumulateurs testés sont rassemblés dans le tableau I ci-dessous.

**TABLEAU I**

| référence accumulateur | A | B | C |
|---|---|---|---|
| type | invention | étanche | ouvert avec maintenance |
| excédent d'électrolyte | + 45 % | + 17 % | + 60 % |
| séparateur | perméable | perméable | imperméable |
| système de recombinaison | oui | oui | non |
| pression de la soupape | 1 bar | 2 bars | 1 bar |
| C⁻/C⁺ | 130% | 160% | 130 % |
| durée de vie | 1100 cycles | 700 cycles | 1500 cycles (50 cycles sans maintenance) |
| capacité après 650 cycles : mesurée à lc/3 | 88 Ah | 82 Ah | 88 Ah |
| mesurée à 2lc | 88 Ah | 80 Ah | 87 Ah |
| énergie massique après 650 cycles : mesurée à lc/3 | 73 Wh/Kg | 64 Wh/Kg | 70 Wh/Kg |
| mesurée à 2lc | 64 Wh/Kg | 55 Wh/Kg | 61 Wh/Kg |
| Puissance massique après 100 cycles à 50% de DOD | 240 W/Kg | 190 W/Kg | 240 W/Kg |

## Revendications

1. Accumulateur ouvert de type industriel comprenant en combinaison
- un électrolyte alcalin introduit en quantité excédentaire par rapport à la quantité d'électrolyte limitée à la porosité des composants,
- un volume situé entre la base d'un faisceau électrochimique et le fond d'un conteneur susceptible de contenir au moins partiellement ladite quantité excédentaire d'électrolyte,
- ledit faisceau électrochimique comportant au moins un couple d'électrodes composé d'une électrode positive contenant de l'hydroxyde de nickel et d'une électrode négative encadrant un séparateur hydrophile et perméable aux gaz dont un prolongement dépasse dudit faisceau et est en contact avec l'électrolyte contenu dans ledit volume,
- un dispositif supplémentaire pour la recombinaison de l'oxygène.

2. Accumulateur selon la revendication 1, dans lequel ladite quantité d'électrolyte est au moins égale à 120% de la quantité d'électrolyte contenu dans le volume poreux total desdites électrodes, dudit séparateur et dudit dispositif.

3. Accumulateur selon l'une des revendications 1 et 2, dans lequel lesdites électrodes négatives ont une capacité totale comprise entre 100% et 150% de la capacité totale desdites électrodes positives.

4. Accumulateur selon l'une des revendications précédentes, dans lequel ledit dispositif comporte un espaceur associé à une électrode auxiliaire.

5. Accumulateur selon l'une des revendications précédentes, dans lequel lesdites électrodes positives sont de type fritté et lesdites électrodes négatives sont de type empâté sur un support conducteur choisi parmi un support bidimensionnel et un support tridimensionnel.

6. Accumulateur selon l'une des revendications précédentes, dans lequel lesdites électrodes positives sont de type empâté sur un support conducteur tridimensionnel et lesdites électrodes négatives sont de type empâté sur un support conducteur choisi parmi un support bidimensionnel et un support tridimensionnel.

7. Accumulateur selon l'une des revendications précédentes, dans lequel lesdites électrodes négatives contiennent un alliage métallique hydrurable comme matière électrochimiquement active.

## Claims

1. An industrial type vented cell storage battery comprising in combination:
- an alkaline electrolyte introduced in excess quantity relative to the quantity of electrolyte limited to the porosity of the components,
- a space between the base of an electrode package and the bottom of a container adapted to contain at least part of an excess quantity of alkaline electrolyte,
- said electrode package including at least one electrode pair comprising a positive electrode containing nickel hydroxide and a negative electrode between which is a hydrophilic and gas-permeable separator an extension of which beyond said electrode package is in contact with electrolyte contained in said space,
- an additional oxygen recombination device.

2. A storage battery according to claim 1 wherein said quantity of electrolyte is at least equal to 120% of the quantity of electrolyte contained in the total pore volume of said electrodes, said separator and said device.

3. A storage battery according to either claim 1 or claim 2 wherein said negative electrodes have a total capacity in the range 100% to 150% of the total capacity of said positive electrodes.

4. A storage battery according to any of the preceding claims wherein said device includes a spacer associated with an auxiliary electrode.

5. A storage battery according to any of the preceding claims wherein said positive electrodes are of the sintered type and said negative electrodes are of the paste type on a conductive support selected from a two-dimensional support and a three-dimensional support.

6. A storage battery according to any of the preceding claims wherein said positive electrodes are of the paste type on a three-dimensional conductive support and said negative electrodes are of the paste type on a conductive support selected from a two-dimensional support and a three-dimensional support.

7. A storage battery according to any of the preceding claims wherein said negative electrodes contain a hydridable metal alloy as the electrochemicatly active material.

## Patentansprüche

1. Offener industrieller Akkumulator, welcher in Kombination umfasst
- einen alkalischen Elektrolyten, der in überschüssiger Menge bezüglich der auf die Poren der Komponenten begrenzten Elektrolytmenge eingebracht wird,
- ein zwischen der Basis eines elektrochemischen Bündels und dem Boden eines Behälters befindliches Volumen, das geeignet ist, wenigstens teilweise die überschüssige Menge an Elektrolyt zu beinhalten,
- wobei das elektrochemische Bündel wenigstens ein Elektrodenpaar umfasst, bestehend aus einer Nickelhydroxid enthaltenden positiven Elektrode und einer negativen Elektrode, welche einen hydrophilen und gasdurchlässigen Separator umgeben, von dem eine Verlängerung von dem Bündel vorragt und in Kontakt mit dem in dem Volumen enthaltenen Elektrolyten ist,
- eine zusätzliche Vorrichtung zur Rekombination des Sauerstoffs.

2. Akkumulator nach Anspruch 1, bei welchem die Elektrolytmenge wenigstens 120% der in dem gesamten Porenvolumen der Elektroden, des Separators und der Vorrichtung enthaltenen Elektrolytmenge beträgt.

3. Akkumulator nach einem der Ansprüche 1 und 2, bei welchem die negativen Elektroden eine Gesamtkapazität haben, die zwischen 100% und 150% der Gesamtkapazität der positiven Elektroden beträgt.

4. Akkumulator nach einem der vorhergehenden Ansprüche, bei welchem die Vorrichtung einen mit einer zusätzlichen Elektrode verbundenen Abstandshalter umfasst.

5. Akkumulator nach einem der vorhergehenden Ansprüche, bei welchem die positiven Elektroden gesintert und die negativen Elektroden gepastet sind auf einen leitfähigen Träger, der aus einem zweidimensionalen Träger und einem dreidimensionalen Träger gewählt ist.

6. Akkumulator nach einem der vorhergehenden Ansprüche, bei welchem die positiven Elektroden auf einen dreidimensionalen leitfähigen Träger gepastet und die negativen Elektroden auf einen leitfähigen Träger gepastet sind, der aus einem zweidimensionalen Träger und einem dreidimensionalen Träger gewählt ist.

7. Akkumulator nach einem der vorhergehenden Ansprüche, bei welchem die negativen Elektroden eine Metallhydridlegierung als elektrochemisch aktives Material enthalten.
